# EUROPEAN PATENT APPLICATION

(11) **EP 2 487 622 A1**
(43) Date of publication of application: **15.08.2012**
(21) Application number: 10822092.2
(22) Date of filing: 07.10.2010
(51) Int. Cl.: G06F 21/24, G06F 3/041, G06F 21/20, H04M 1/673

(54) **MOBILE DEVICE, AND SECURITY LOCK CONTROL METHOD AND PROGRAM THEREOF**

(30) Priority: 09.10.2009 JP 2009235589
(71) Applicant: NEC Corporation, Tokyo 108-8001 (JP)
(72) Inventor: SUGIYAMA Keiichi, Tokyo 108-8001 (JP)
(74) Representative: Vossius & Partner
(86) International application number: PCT/JP2010/067655
(87) International publication number: WO 2011/043422

(57) **Abstract**

Provided are a mobile device and a security lock control method and program for this device, by which, while time and effort of a user at the time of user authentication can be reduced, unauthorized use and incorrect operation can be effectively prevented. A combination of touch operations such as touch, drag, release, tap, flick, and the like entered onto a touch panel by a user is specified whole a security lock processing module is in a state where the security lock function is on, the specified combination of touch operations is collated with a combination indicated by preset authentication information, and when they match, the security lock function is released.

## Description

### TECHNICAL FIELD

The present invention relates to a mobile device including a touch panel and to a security lock control method thereof as well as a security lock control program thereof.

### BACKGROUND ART

Mobile electronic devices such as mobile phones include a security lock function for invalidating the whole operation inputs except for inputs of personal identification numbers in order to prevent unauthorized use and to prevent misoperation thereof while carrying the mobile phones. Under a state where the security lock function is being set, a password is always requested and the security lock function is released usually when a password that is same as the registered one is operation-inputted. This prevents unauthorized use by a third party that does not know the password.

However, several digits of numbers are used as a password for releasing the lock with the normal security lock function, so that it is possible to specify the password by collating the move of the user's fingers and the positions of the numeric keys on a keyboard at the time of inputting the password without looking at the users hand closely. Thus, there is a risk of having the password known by a third party.

A related technique thereof is disclosed in Patent Document 1. The related technique disclosed in Patent Document 1 is a mobile electronic device that is in a structure which compares data generated from a locus inputted by handwriting via a touch panel with data registered in advance, and releases the key lock function when those data match with each other.

The technique of Patent Document 1 uses the locus data such as a pattern, a line, and the like inputted via the touch panel for user authentication for releasing the key lock function, so that it is possible to prevent the unauthorized use more effectively than the case of using an alphanumeric character password system.

Patent Document 1: Japanese Unexamined Patent Publication 2007-257140

However, while the related technique of Patent Document 1 described above performs user authentication by using a pattern or a line formed by handwriting inputted via the touch panel as a password, the screen of the touch panel needs to be used widely when inputting the handwriting of the pattern via the touch panel and the user's input motion becomes big. This gives a troublesome feeling to the use. Further, since the password input motion becomes big, there is a high risk of having the pattern or line as the password leaked to a third party staying nearby.

It is therefore an object of the present invention to provide a mobile device, a security lock control method and a program thereof, which can effectively prevent unauthorized use as well as misoperation while reducing the work of the user at the time of user authentication.

### DISCLOSURE OF THE INVENTION

In order to achieve the foregoing object, the mobile device according to the present invention is characterized to include: a touch panel that detects a touched position on a screen and inputs it as a detection signal; a touch discrimination module that discriminates which of touch operations including "tap and "flick" is executed by a user based on detection information acquired from the touch panel; and a security lock processing module that has a security lock function for restricting operations made on the touch panel and executes setting/releasing of the security lock function, wherein the security lock processing module has a function that specifies a combination of the touch operations done by the user in order based on a discrimination result acquired by the touch discrimination module in a state where the security lock function is being set, collates the specified combination of a series of touch operations with a combination of the touch operations shown by authentication information stored in advance, and releases the security lock function when the combinations match with each other.

Further, the security lock control method according to the present invention is used for a mobile phone including a touch panel that detects a touched position on a screen and inputs it as a detection signal, and a security lock function for restricting operations made on the touch panel, and the method is characterized to: discriminate which of touch operations including "tap and "flick" is executed by a user based on the signal from the touch panel in a state where the security lock function is being set; collate the discriminated combination of a series of touch operations with a combination of the touch operations shown by authentication information stored in advance; and release the security lock function when the combinations match with each other.

Furthermore, the security lock control program according to the present invention is characterized to cause a computer to execute: a touch operation discrimination function that receives a signal from a touch panel and discriminates which of touch operations including "tap and "flick" is executed by a user based on the signal; a security lock function that restricts operations made on the touch panel; and a lock release function that collates the discriminated series of touch operations with a combination of the touch operations shown by authentication information stored in advance in a state where the security lock function is being set, and releases the security lock function when the combinations match with each other.

The present invention performs user authentication by using a combination of various kinds of touch operations such as tap and flick to the touch panel as the authentication information and releases the lock function, so that it is possible to execute highly convenient authentication processing by utilizing the operability of the touch panel. This makes it possible to prevent the unauthorized use and misoperation while reducing the operation load for the user.

### BRIEF DESCRIPTION OF THE DRAWINGS

FIG. 1 is a functional block diagram showing the structure of a mobile phone that is an exemplary embodiment according to the invention;
FIG. 2 is an illustration showing an encryption input screen displayed on a display unit of the mobile phone of the exemplary embodiment disclosed in FIG. 1; and
FIG. 3 is a flowchart showing an example of actions of the mobile phone of the exemplary embodiment disclosed in FIG. 1.

### BEST MODES FOR CARRYING OUT THE PRESENT INVENTION

An exemplary embodiment according to the invention will be described hereinafter by referring to the drawings.

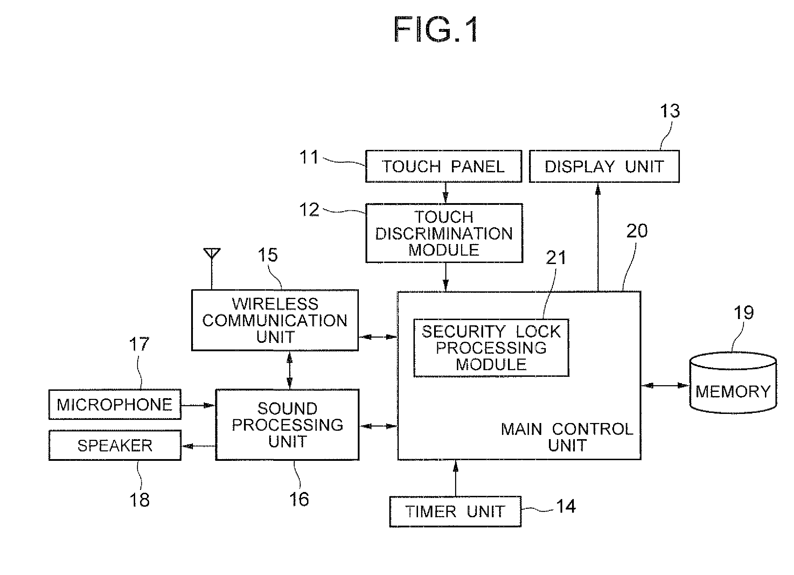

FIG. 1 is a functional block diagram showing the structure of a mobile phone according to the exemplary embodiment. As shown in FIG. 1, the mobile phone according to the exemplary embodiment includes: a display unit 13 which displays images on a screen; a touch panel 11 which detects a touched position on the screen and inputs it as a detected signal; a touch discrimination module 12 which discriminates kinds of touch operations as kinds of changes in the motions on the screen based on the detection signal acquired from the touch panel 11 by having the touched position on the screen as the reference; a timer unit 14 which performs timing processing; a wireless communication unit 15 which includes an antenna and performs wireless communications with a base station via the antenna; a sound processing unit 16 which is connected to the wireless communication unit and processes a wireless-communication sound signal; a microphone 17 which inputs a sound to the sound processing unit 16; a speaker 18 which outputs a sound based on the signal from the sound processing unit 16; a memory 19 which stores various kinds of data such as an address book, image information, and the like; and a main control unit 20 which controls actions of each of those structural elements.

Further, the main control unit 20 includes a security lock processing module 21 that has a security lock function of restricting operations for the touch panel 11 and has a function of setting/releasing the security lock function. This security lock function is a function which invalidates input operations done by the user. Thus, the mobile phone according to the exemplary embodiment is in an unusable state while the security lock function is being set.

The display unit 13 has a function of displaying images such as a character and a pattern on the screen based on image data transmitted from the main control unit 20, e.g., a liquid crystal display. The touch panel 11 detects the position on the screen touched by the user, and outputs a detection signal showing the coordinate of the touched position to the touch discrimination module 12.

The touch discrimination module 12 has a function which discriminates the kind of the touch operation done by the user on the screen, detects the touched position based on the detection signal from the touch panel 11, and transmits the detected touch start position and the discrimination result of the kind of the touch operation to the main control unit 20. The touch discrimination module 12 discriminates at least "touch", "drag", "release", "tap", "double tap", and "flick" as the kinds of the touch operations done by the user. Regarding the operations including shift of touch positions such as "drag" and "flick", the touch discrimination module 12 detects the coordinate of the start position and the coordinate of the end position.

The above-described touch operations are the changes in the shift of the touched position on the screen classified and defined in a plurality of kinds. The "touch" is an operation of touching the screen, the "drag" is a sliding operation while touching the screen, and the "release" is a detaching operation from a state of the "touch". Further, the "tap" is an operation of touching the screen and releasing it immediately thereafter, i.e., an operation of tapping the screen. The "double tap" is an operation of tapping a same position twice continuously on the screen in a short time defined that is in advance, and the "flick" is an operation of touching and sweeping the screen.

The wireless communication unit 15 is connected to the base station by a wireless channel via the antenna, and includes a function of performing sound communication or data communication. The sound processing unit 16 includes a function of processing the sound signal from the wireless communication unit 15 and transmitting it to the speaker 18, and a function of processing the sound signal from the microphone 17 and transmitting it to the wireless communication unit 15.

The main control unit 20 includes: a function of executing telephone receiving processing, mail receiving processing, or the like according to a signal received at the wireless communication unit 15, and controlling the sound processing unit 16 and the display unit 13 by using sound data or image data read out from the memory 19; and a function of executing telephone sending processing, mail sending processing, or the like according to information from the touch discrimination module 12, and controlling the sound processing unit 16 and the display unit 13 by using sound data or image data read out from the memory 19.

The main control unit 20 includes a security lock processing module 21. The security lock processing module 21 includes a security lock function of invalidating an operation for the touch panel 11 to make the own device in an unusable state, and a function of setting and releasing the security lock function.

The security lock processing module 21 monitors occurrence of a user operation based on a discrimination result acquired by the touch discrimination module 12 while the security lock function is in a released state, judges whether or not the time where there is no operation made by the user exceeds a specific time set in advance based on timing information from the timer unit 14, and automatically sets the security lock function when judged that the time has exceeded. Thereby, the mobile phone according to the exemplary embodiment can effectively prevent unauthorized use even when it is being left alone.

Further, the security lock processing module 21 includes a function of releasing the security lock function after performing user authentication processing while the security lock function is being set. The user authentication processing is the processing which specifies a combination of the touch operations done by the user in order based on the discrimination result acquired by the touch discrimination module 12, collates the specified combination of a series of touch operations with a combination of the touch operations shown by authentication information, and authenticates the user as a proper user when those collate with each other.

Now, the function of releasing the security lock function in the security lock processing module 21 will be described in a specific manner.

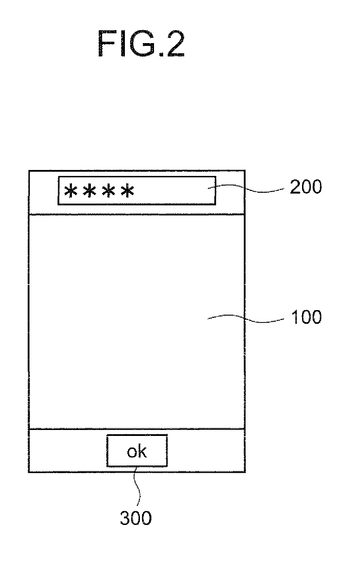

The security lock processing module 21 displays an encryption input screen on the display unit 13 based on image information stored in the memory 19 while the security lock function is being set. FIG. 2 is an illustration showing an example of the encryption input screen. The user performs a touch operation in an operation accepting region 100 on the encryption input screen, the touch discrimination module 12 sends out the touch operation discrimination result to the security lock processing module 21, and the security lock processing module 21 that has received the discrimination result displays "*" on an input display section 200 on the encryption input screen. "*" shows that a single touch operation is inputted.

When receiving a discrimination result from the touch discrimination module 12 indicating that the user touched the position of an OK button 300 on the encryption input screen, the security lock processing module 21 judges that a series of touch operations done by the user is settled, specifies a combination of the series of touch operations done by the user, collates the specified combination of the series of touch operations with the combination shown by the authentication information, and releases the security lock function by authenticating the user as the proper user when the both combinations match with each other perfectly.

For example, in a case where the authentication information is "tap - flick - tap - drag", the security lock function is released when the user makes motions of "tap", "flick", "tap", "drag" in order on the operation accepting region 100 of the encryption input screen.

As described, the mobile phone according to the exemplary embodiment executes the user authentication by using a combination of various touch operations such as "touch", "drag", "release", "tap", "double tap", "flick", and the like as the encryption, and releases the security lock function after the authentication. Thus, the user can perform the input operation for the user authentication without minding the operation positions on the screen. Therefore, it is possible to perform the encryption input operation more quickly than the case of inputting a password by pushing down prescribed alphanumeric keys in order.

Note here that the authentication information described above may also be information containing direction data for those done with operating directions such as "drag", "flick", and the like among the various kinds of touch operations. For example, in a case where the authentication information is "tap - flick to left - tap - drag to right", the security lock processing module 21 specifies the direction data showing the four directions of the top-bottom and left-right directions for the operations having the shift in the touch positions such as "drag", "flick", and the like based on the detected information acquired by the touch discrimination module 12, and releases the security lock function when judged that the operations are done in order of "tap "flick to the left direction", "tarp", "drag to the right direction" in the operation accepting region 100 on the encryption input screen.

By setting the authentication information to contain the direction data for the touch operations done with operating directions such as "drag", "flick", and the like, the number of patterns of the authentication information is increased. Thus, the security can be improved still more. The direction data is not limited only to the four directions of top-bottom and left-right directions but may be two directions or eight directions.

The security lock processing module 21 includes a function which specifies the direction data of "drag" and "flick", respectively, according to reference information set in advance based on the respective start positions and end positions of "drag" and "flick" of the discrimination result acquired by the touch discrimination module 12. Therefore, the directions shown by the direction data are set as four directions, two directions, eight directions or the like according to the reference information.

Further, the security lock processing module 21 includes a function which updates the authentication information stored in the memory 19 according to the operation input done by the user while the security lock function is being released. Now, the function of the security lock processing module 21 for updating the authentication information will be described in a specific manner.

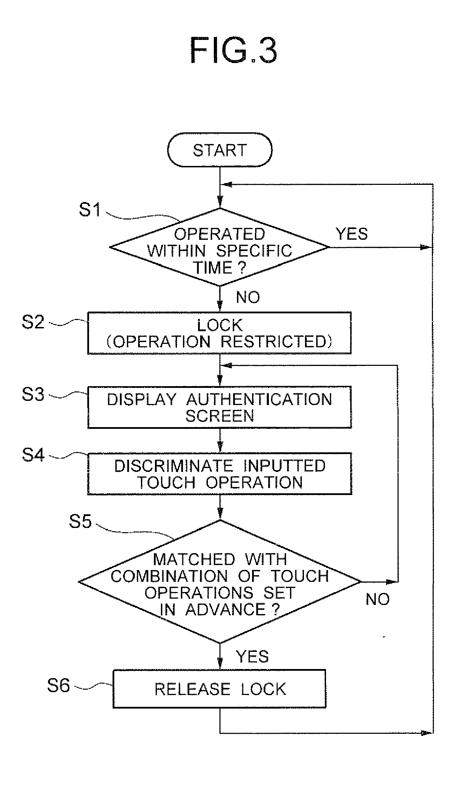

When the security lock function is being released, the security lock processing module 21 displays an authentication information input screen on the display unit 13 upon accepting an authentication information changing request inputted according to the operation of the user. The authentication information input screen may be the same as the encryption input screen shown in FIG. 3. Further, when the user performs the touch operations in order on the operation accepting region 100 on the authentication information input screen and the touch operations are discriminated by the touch discrimination module 12, the security lock processing module 21 displays "*" in the input display section 200 of the authentication information input screen.

Then, when the user touches the OK button 300 on the authentication information input screen, a notification showing that the input of the authentication information is settled is inputted. Thereby, the security lock processing module 21 that has inputted the notification specifies a series of touch operations done by the user and updates the authentication information in the memory 19 by taking the combination of the specified series of touch operations as new authentication information.

By updating the authentication information stored in the memory 19 in the manner described above, it is possible to deal with leakage of the authentication information and to secure the security.

Note here that new authentication information may contain pressing force data of each touch operation, when the security lock processing module 21 updates the authentication information. For example, the touch discrimination module 12 discriminates the touched position, the touch operation, and the pressing force of the touch operation based on the detection signal from the touch panel 11, and the security lock processing module 21 classifies the pressing force of each touch operation into "large", "medium", "small" based on a threshold value, and updates the authentication information to information showing "tap: large pressing force, flick to left: medium pressing force, tap: large pressing force, drag to right: medium pressing force", and the like based on the touch operations of the user.

By containing the pressing force of the touch operations different for each operator in the authentication information, the authentication information peculiar to the user can be set. Therefore, it is possible to prevent unauthorized use and to strengthen the security effectively.

As described, the mobile phone according to the exemplary embodiment releases the security lock function after performing the user authentication by using a combination of touch operations such as "touch", "drag", "release", "tap", "flick", and the like done by the user on the touch panel 11 as an encryption when the security lock function is being set. Thus, the user may simply perform various kinds of touch operations without minding the operation positions when inputting the encryption for the user authentication. Therefore, still quicker input operations can be done compared to the case of inputting a password, so that the security lock function can be released promptly.

Next, actions of the mobile phone according to the exemplary embodiment will be described. Explanations of the actions provided hereinafter show a security lock control method of the mobile phone according to the exemplary embodiment.

FIG. 3 is a flowchart showing an example of actions of the mobile phone of the exemplary embodiment disclosed in FIG. 1. As shown in FIG. 3, in the mobile phone according to the exemplary embodiment, the security lock processing module 21 monitors occurrence of operations done by the user based on the judgment result acquired by the touch discrimination module 12 based on the signal from the touch panel 11 when the security lock function is being released. When there is no operation executed within a specific time (step S1 of FIG. 3), the security lock processing module 21 sets the security lock function (step S2 of FIG. 3).

Subsequently, the security lock processing module 21 displays the encryption input screen on the display unit 13 (step S3 of FIG. 3) when the security lock function is being set, specifies a series of touch operations done by the user based on the judgment result acquired by the touch discrimination module 12 (step S4 of FIG. 3), collates the specified series of touch operations with the combination of the touch operations shown by the authentication information stored in the memory 19 and when judged as being matched (YES in step S5 of FIG. 3), releases the security lock function (step S6 of FIG. 3).

For example, assuming that the user performs "tap", "lick", "tap", "drag" in order on the encryption input screen and "tap - flick - tap - drag" is recorded in the authentication information, the series of touch operations done by the user and the authentication information match with each other. Thus, the security lock function is released.

As described, the mobile phone according to the exemplary embodiment employs a combination of various kinds of touch operations such as "touch", "drag", "release", "tap", "flick", and the like done by the user on the touch panel 11 as the encryption for the user authentication, and releases the security lock function after the authentication when the security lock function is being set. Thus, the user may simply perform specific touch operations without minding the operation positions when performing input operations for the user authentication. Therefore, still quicker input operations can be done compared to the case of authentication by inputting a password, so that the security lock function can be released promptly.

Regarding the functional contents of the touch discrimination module 12 and the security lock processing module 21 described above may be put into a program and have it executed by a computer. Further, the program may be recorded on a non-transitory recording medium such as a DVD, a CD, or a flash memory. In such case, the program is read out from the recording medium by the computer and executed.

As described above, with the mobile phone according to the present invention, the security lock processing module 21 employs a combination of various kinds of touch operations such as "touch", "drag", "release", "tap", "flick", and the like done by the user on the touch panel 11 as the encryption for the user authentication required for releasing the security lock function. Thus, the user can perform various kinds of touch operations without minding the operation positions on the screen when performing encryption input operations for the user authentication, so that quicker input operations can be achieved by reducing the troublesome work compared to the case of inputting a password by pressing prescribed alphanumeric keys.

Further, since the combination of the way of doing the operations is used as the encryption, the range of the user operations at the time of inputting the encryption becomes a small region. Moreover, there is no corresponding relation between the inputted encryption and the operation positions. Therefore, it is difficult for a third party to know the series of touch operations as the authentication information. This makes it possible to provide a high-level security without degrading the operability of the touch panel.

Further the mobile phone according to the exemplary embodiment automatically sets the security lock function to be in an unusable state when there is no operation conducted for a specific time while the security lock function is being released. Thus, unauthorized use thereof can be effectively prevented even when it is being left alone.

A part of or a whole part of the above-described embodiment can be depicted as in following Supplementary Notes. However, it is not limited only to the followings.

### (Supplementary Note 1)

A mobile device provided with a lock function, which includes: a touch panel that detects a touched position on a screen and outputs a detection signal; a touch discrimination module that discriminates a kind of touch operation as a kind of change in a motion on the screen by having the touched position on the screen as a reference based on the signal from the touch panel; and a lock processing module that releases a lock when the discriminated kind of the touch operation matches with authentication information set in advance.

### (Supplementary Note 2)

The mobile device as depicted in Supplementary Note 1, wherein the touch discrimination module discriminates at least "tap" or "flick" as the kind of the touch operation.

### (Supplementary Note 3)

The mobile device as depicted in Supplementary Note 2, wherein: the authentication information is information showing a combination of the touch operations; and the lock processing module specifies a combination of a series of touch operations, and releases the lock when the specified combination of the series of touch operations match with the authentication information.

### (Supplementary Note 4)

The mobile device as depicted in Supplementary Note 3, wherein the authentication information contains direction data regarding a touch operation done with operating directions.

### (Supplementary Note 5)

The mobile device as depicted in Supplementary Note 4, wherein when an authentication information changing request is inputted from outside in a state where the lock is being released, the lock processing module updates the authentication information to information that shows the kind of newly discriminated touch operation.

### (Supplementary Note 6)

The mobile device as depicted in Supplementary Note 5, wherein the authentication information contains pressing force information of the touch operation.

### (Supplementary Note 7)

A security lock control method by a mobile device provided with a lock function, and the method includes: discriminating a kind of touch operation as a kind of change in a motion on a screen by having a touched position on the screen as a reference based on a signal from the touch panel; and releasing a lock when the discriminated kind of the touch operation matches with authentication information set in advance.

### (Supplementary Note 8)

The security lock control method as depicted in Supplementary Note 7, wherein as the kind of the touch operation, at least "tap" or "flick" is discriminated.

### (Supplementary Note 9)

The security lock control method as depicted in Supplementary Note 8, wherein: the authentication information is information showing a combination of the touch operations; and a combination of a series of touch operations is specified and the lock is released when the specified combination of the series of touch operations match with the authentication information.

### (Supplementary Note 10)

The security lock control method as depicted in Supplementary Note 9, wherein the authentication information contains direction data regarding a touch operation done with operating directions.

### (Supplementary Note 11)

The security control method as depicted in Supplementary Note 10, wherein when an authentication information changing request is inputted from outside in a state where the lock is being released, the authentication information is updated to information that shows the kind of newly discriminated touch operation.

### (Supplementary Note 12)

The security lock control method as depicted in Supplementary Note 11, wherein the authentication information contains pressing force information of the touch operation.

### (Supplementary Note 13)

A security lock control program that causes a computer to execute: a lock function; a touch discrimination function that discriminates a kind of touch operation as a kind of change in a motion on a screen by having a touched position on the screen as a reference based on a signal from a touch panel; and a lock release function that releases a lock when the discriminated kind of the touch operation matches with authentication information set in advance.

### (Supplementary Note 14)

The security lock control program as depicted in Supplementary Note 13, wherein the touch discrimination function is a function that discriminates at least "tap" or "flick" as the kind of the touch operation.

### (Supplementary Note 15)

The security lock control program as depicted in Supplementary Note 14, wherein: the authentication information is information showing a combination of the touch operations; and the lock release function is a function that specifies a combination of a series of touch operations, and releases the lock when the specified combination of the series of touch operations match with the authentication information.

### (Supplementary Note 16)

The security lock control program as depicted in Supplementary Note 15, wherein the authentication information contains direction data regarding a touch operation done with operating directions.

### (Supplementary Note 17)

The security control program as depicted in Supplementary Note 16, wherein when an authentication information changing request is inputted from outside in a state where the lock is being released, the computer is caused to execute a function of updating the authentication information to information that shows the kind of newly discriminated touch operation.

### (Supplementary Note 18)

The security lock control program as depicted in Supplementary Note 17, wherein the authentication information contains pressing force information of the touch operation.

While the present invention has been described heretofore by referring to the embodiment (and EXAMPLE), the present invention is not limited only to the embodiment (and EXAMPLE). Various changes and modifications occurred to those skilled in the art can be applied to the structures and details of the present invention without departing from the scope of the present invention.

This Application claims the Priority right based on Japanese Patent Application No. 2009-235589 filed on October 9, 2009 and the disclosure thereof is hereby incorporated by reference in its entirety.

### INDUSTRIAL APPLICABILITY

The present invention can be applied to mobile phones utilizing touch panels and to electronic devices similar to those.

### REFERENCE NUMERALS

- 11: Touch panel
- 12: Touch discrimination module
- 13: Display unit
- 14: Timer unit
- 15: Wireless communication unit
- 16: Sound processing unit
- 17: Microphone
- 18: Speaker
- 19: Memory
- 20: Main control unit
- 21: Security lock processing module

## Claims

1. A mobile device provided with a lock function, comprising:
a touch panel that detects a touched position on a screen and outputs a detection signal;
touch discrimination means for discriminating a kind of touch operation as a kind of change in a motion on the screen by having the touched position on the screen as a reference based on the signal from the touch panel; and
lock processing means for releasing a lock when the discriminated kind of the touch operation matches with authentication information set in advance.

2. The mobile device as claimed in claim 1, wherein
the touch discrimination means discriminates at least "tap" or "flick" as the kind of the touch operation.

3. The mobile device as claimed in claim 2, wherein:
the authentication information is information showing a combination of the touch operations; and
the lock processing means specifies a combination of a series of touch operations, and releases the lock when the specified combination of the series of touch operations match with the authentication information.

4. The mobile device as claimed in claim 3, wherein
the authentication information contains direction data regarding a touch operation done with operating directions.

5. The mobile device as claimed in claim 4, wherein
when an authentication information changing request is inputted from outside in a state where the lock is being released, the lock processing means updates the authentication information to information that shows the kind of newly discriminated touch operation.

6. The mobile device as claimed in claim 5, wherein
the authentication information contains pressing force information of the touch operation.

7. A security lock control method by a mobile device provided with a lock function, the method comprising:
discriminating a kind of touch operation as a kind of change in a motion on a screen by having a touched position on the screen as a reference based on a signal from the touch panel; and
releasing a lock when the discriminated kind of the touch operation matches with authentication information set in advance.

8. The security lock control method as claimed in claim 7, wherein
as the kind of the touch operation, at least "tap" or "flick" is discriminated.

9. The security lock control method as claimed in claim 8, wherein:
the authentication information is information showing a combination of the touch operations; and
a combination of a series of touch operations is specified and the lock is released when the specified combination of the series of touch operations match with the authentication information.

10. A security lock control program that causes a computer to execute:
a lock function;
a function of discriminating a kind of touch operation as a kind of change in a motion on a screen by having a touched position on the screen as a reference based on a signal from a touch panel; and
a function of releasing a lock when the discriminated kind of the touch operation matches with authentication information set in advance.
